# EUROPEAN PATENT APPLICATION

(11) **EP 4 683 139 A1**
(43) Date of publication of application: **21.01.2026**
(21) Application number: 25189839.1
(22) Date of filing: 16.07.2025
(51) Int. Cl.: H02G 1/04, H02G 7/02, F16G 11/10

(54) **SAFETY CLAMP FOR CABLE STRINGING OPERATIONS**

(30) Priority: 18.07.2024 IT 202400016675
(71) Applicant: TESMEC S.P.A., 20123 Milano (MI) (IT)
(72) Inventor: Oscar, Alberto, 24063 Castro (BG) (IT); Colleoni, Matteo, 24036 Ponte San Pietro (BG) (IT); Osio, Stefano, 24048 Treviolo (BG) (IT)
(74) Representative: Petraz, Gilberto Luigi

(57) **Abstract**

Safety clamp (10) for cable stringing operations, comprising a pair of jaws (11, 12) opened or closed by means of a driving device (13), configured to be connected, during use, to an attachment element (14) associated with a machine (15) for recovering a cable (16) sliding on a cam (17) and along a plurality of wheels (18, 19) opposing the cam (17); when the cable (16) slides toward the machine (15) in a first direction (D1), the jaws (11, 12) are in a first open position of passage of the cable (16) and the cam (17) is inactive, while, when the cable (16) slides in a second direction (D2) opposite the first direction (D1), the cam (17) automatically activates, pressing the cable (16) against at least one of the wheels (18, 19) and associating it with the safety clamp (10), and the driving device (13), since it is connected to the attachment element (14), puts the safety clamp (10) under tension and determines the passage of the jaws (11, 12) from the first open position to a second position of clamping the cable (16), which entails interrupting the motion of the cable (16) and of the safety clamp (10) associated therewith in the second direction (D2).

## Description

### FIELD OF THE INVENTION

The present invention concerns a safety clamp for stringing operations, usable in particular in a machine for recovering a cable, such as an electrical conductor, a rope, an optical fiber or suchlike, in particular for the continuous recovery and disposal of a cable in a cable-laying plant, for replacement activities of the existing cable in the laying plant.

The recovery machine can be used in particular in a plant for laying, for example, a high-voltage overhead power line, and in general in overhead lines that provide for the so-called "braked" laying of cables, or overhead conductors.

### BACKGROUND OF THE INVENTION

In overhead power lines stringing plants, the current method for replacing the overhead conductors, so-called "reconductoring", provides the following operations:
- positioning of the pulleys for laying the conductor on the towers that make up the section;
- connection of the new conductor or a pulling rope to the existing conductor;
- recovery of the old conductor through a winch-brake, storing the old conductor on empty reels previously prepared at the winch station;
- simultaneous release of the new conductor from the reel on which it is wound by using a brake (or a winch-brake) at the brake station, to allow the "braked" stringing of the new conductor;
- subsequent collection and transport of the old conductor reels to a recycling and disposal center, where the conductor is broken down and divided according to the materials that compose it.

The overhead high-voltage transmission lines can be composed of single conductors (one per phase), but more typically they are composed of multiple conductors for each phase, varying from 2 to 6, but also tending to increase up to 8 or 10 conductors.

The brake and winch stations are located at the opposite ends of a section of the line on which the conductor is being replaced.

The winch station where the old conductor is recovered consists of a winch-brake machine for the recovery of the old conductor, and a number of reel support stands equal to the number of conductors that make up each single phase of the line. The empty reels that collect the "old" conductor will then be installed on these support stands, and will then be disposed of in suitable recycling centers.

The brake station where the unwinding and tensioning of the new conductor (or of a pulling rope to be used later for the stringing of new conductors) takes place will consist of a brake machine and a number of reel support stands equal to the number of conductors that make up each single phase of the line.

The size of the winch and brake stations is proportional to the number of support stands on which the individual reels have to be housed.

The brake winches for the recovery of the existing conductor consist of two capstans, whose diameter is provided to be 35 times the diameter of the conductor to be recovered.

Normally, the conductors that make up the high-voltage lines have multiple interruptions along their length, essentially due to the presence of so-called mid-span joints. Their function is to connect the two ends of the conductors during a reel change, that is, when a reel of new conductor runs out and at the beginning of the next reel.

Generally, the joints are composed of straight tubular cores in aluminum and/or steel with a length ranging from 500mm to 2000mm.

These joints cannot pass over the capstans, since they would break because of bending caused by winding on the circular surface, with the consequent catastrophic fall of the line under tension.

For this reason, current reconductoring operations are subject to countless process stops; in essence, when reaching the presence of a joint in front of the winch machine, it is necessary to proceed as follows:
- stop the winch machine when the joint is in proximity to the capstans;
- clamp the head of the conductor upstream of the joint with clamps suitable to keep the pull on the line;
- release the pull of the other end of the conductor on the winch side;
- cut and remove the joint in question;
- replace the cut joint with a flexible joint (e.g. stocking type joint);
- resume the pulling of the line with the winch machine;
- remove the clamp that held the end upstream of the line;
- resume the reconductoring operations until the stocking joint exits the winch machine and appears on the old conductor recovery reels;
- stop the winch machine again;
- clamp the head of the conductor on the winch side with clamps suitable to keep the pull on the line;
- release the pull of the other end of the conductor on the reel side;
- remove the stocking joint and clamp the end of the conductor onto the recovery reel;
- resume the pulling of the line with the winch machine;
- remove the clamp that held the end upstream of the line;
- resume the reconductoring operations until there is a new joint in front of the winch machine or until the old conductor recovery reel is full and has to therefore be replaced.

Normally, the line undergoing conductor replacement has variable lengths, but it is typically subdivided into individual operating sections, whose length can vary from 3 to 6 km, depending on the morphological characteristics of the line and the orographic conditions of the terrain.

Within these sections there may be anchor towers, typically in correspondence with high angles or special conditions such as critical crossings or other, where the conductor is anchored horizontally and electrical continuity is guaranteed with by-pass sections; if the anchor tower does not coincide with the start or end of the section, a so-called through anchor is realized, that is, the by-pass is connected to the pulling line with two stocking joints connected with a swivel joint, or with double stocking joints. When these sections reach the winch machine, one interruption is required in front of the winch in order to remove the possible swivel joint, and a second interruption is required after the passage over the winch in order to remove and recover the stocking joints, which are intended for multiple use and not intended for waste, with a sequence very similar to that described above for mid-span joints.

In addition, the process is interrupted whenever the new conductor present at the brake station is exhausted, and therefore the new conductor reel has to be replaced, or when the reel of old conductor is filled at the winch station and therefore an empty reel has to be installed.

Finally, it should be added that the sizes and rigidity of the mid-span joints are such that they are often also not able to pass through the laying pulleys, without running the risk of deformation and/or breakage; in the event that the conditions of the joint do not guarantee the necessary safety coefficients for the reconductoring operation, the joint itself has to be replaced by a temporary connection created as described above with stocking joints, with the same operating sequence. Alternatively, so-called joint passers or joint covers can be used, consisting of tubular steel elements divided into two halves, which completely wrap the joint itself and protect it during laying operations; in any case, these devices have to also be installed before or during the stringing and have to be removed when they reach the winch station.

Conductor recovery systems are known in the industry that replace the traditional winch machine with a so-called continuous pulling system, capable of realizing a continuous stringing by eliminating the need to stop the pulling operation when the mid-span joints or by-pass joints reach the winch machine.

Current recovery systems do not resolve the problem of the possible breakage of the recovered cable inside the machine, resulting in loss of the pulling line, which can have even catastrophic consequences.

Cable breakage can occur, for example, following the passage of the joints inside the machine and/or on capstans.

WO2024048022A1 discloses an extension/contraction device that is used in tensioning a cable.

CN102439808B discloses a gripper device for cables.

There is therefore the need to perfect a safety clamp for stringing operations that can overcome at least one of the disadvantages of the state of the art.

Specifically, one purpose of the present invention is to provide a safety clamp for stringing operations that automatically guarantees the retaining action of the pulling line in the event the cable breaks while passing over the capstans of a traditional winch-brake machine, as well as when passing through a linear traction machine.

Another purpose of the present invention is to provide a safety clamp for stringing operations that is simple to manufacture and can be easily installed in proximity to a recovery machine.

Another purpose of the present invention is to provide a safety clamp for stringing operations that automatically recognizes a reversal of the cable's motion due to a breakage thereof, and therefore intervenes to block this reversed motion.

Another purpose of the present invention is to provide a cable recovery machine equipped with an effective safety clamp.

Another purpose of the present invention is to develop a method for using a safety clamp in a cable laying system comprising at least one cable recovery machine.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, a safety clamp according to the present invention for cable stringing operations comprises:
a pair of jaws between which, during use, a cable is positioned;
a driving device for opening and closing the jaws, configured to be connected, during use, to an attachment element, in particular a damper, associated with a machine for recovering the cable;
a cam and a plurality of wheels opposing the cam. The cable is, during use, positioned and sliding between the cam and the plurality of wheels. When the cable slides toward the machine in a first direction, the jaws are in a first open position of passage of the cable and the cam is inactive, while, when the cable slides in a second direction opposite the first direction, for example following a breakage, the cam automatically activates, pressing the cable against at least one of the wheels and associating it with the safety clamp. The driving device, being connected to the attachment element, puts the safety clamp under tension and determines the passage of the jaws from the first open position to a second position of clamping the cable, which entails interrupting the motion of the cable and of the safety clamp associated therewith in the second direction.

The present safety clamp thus automatically guarantees the retaining action of the pulling line in the event the cable breaks, in particular during the passage of the cable through the recovery machine, which can be a capstan winch-brake machine or a linear traction machine.

The present safety clamp is simple to manufacture, can be easily installed in the proximity of the recovery machine and automatically detects a reversal of the cable's motion caused by a cable breakage and then intervenes to stop the reversed motion.

According to another aspect of the invention, the cam has a notched profile configured to come into contact, during use, with the cable.

According to another aspect of the invention, the cam comprises a plurality of teeth facing toward the inside of the safety clamp, that is, substantially in the opposite direction to the second direction.

According to another aspect of the invention, the safety clamp comprises a first fixed jaw and a second jaw which is movable by means of the driving device and is configured to be clamped on the first jaw in the second position.

According to another aspect of the invention, the jaws are substantially parallel, both in the first position of passage of the cable, and also in the second clamping position.

According to another aspect of the invention, the jaws provide respective interchangeable sheaths for housing the cable when it is in the clamping situation. The sheaths can be made of aluminum.

According to another aspect of the invention, the driving device comprises a mobile support, for example a fork or suchlike, provided with a slot sliding with respect to at least one pin which is associated with a wheel of said plurality of wheels and is able to engage on at least one striker created on the support, the support being connected to an articulated mechanism for connection with the second jaw.

According to another aspect of the invention, the articulated mechanism comprises a pair of arms connected at one end and in a rotatable manner to the support, and at the other end and in a rotatable manner to a lever for driving the second jaw.

According to another aspect of the invention, the cam is rotatable around a corresponding pin and has a curved profile with a thickness that increases from a first end in contact with the cable in the first position to a second end opposite the first end.

According to another aspect of the invention, the cam comprises an elastic element, for example a torsion spring, that tends to keep it in an inactive position.

According to another aspect of the invention, the wheels are equipped with respective grooves for housing the cable, for example substantially arc shaped.

The invention also concerns a cable recovery machine, comprising an attachment element and a safety clamp as defined above, the driving device of which is connected to the attachment element, in particular a damper.

The invention also concerns a method for using a safety clamp in a laying plant comprising at least one cable to be laid and recovered by means of a recovery machine. When the cable slides toward the machine in a first direction, the jaws are in a first open position of passage of the cable and the cam is inactive, while, when the cable slides in a second direction opposite the first direction, for example following a breakage, the cam automatically activates, pressing the cable against at least one of the wheels and associating it with the safety clamp. The driving device, being connected to the attachment element, puts the safety clamp under tension and determines the passage of the jaws from the first open position to a second position of clamping the cable, which entails interrupting the motion of the cable and of the safety clamp associated therewith in the second direction.

### DESCRIPTION OF THE DRAWINGS

These and other aspects, characteristics and advantages of the present invention will become apparent from the following description of some embodiments, given as a non-restrictive example with reference to the attached drawings wherein:

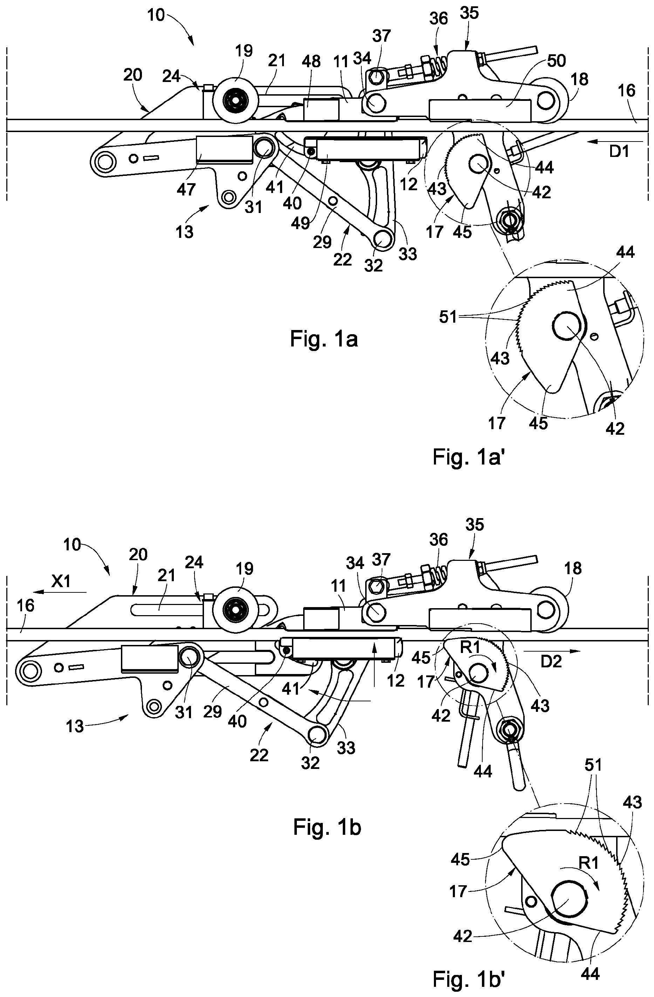

- figs. 1a and 1b show, respectively, an open, or inactive, position and a closed, or active, position of a safety clamp according to the present invention;
- fig. 1a' shows, on a larger scale, a cam in the inactive position of said safety clamp;
- fig. 1b' shows, on a larger scale, the cam in the active position;
- fig. 2 is a lateral view of a cable recovery machine equipped with said safety clamp;
- fig. 3 is a first three-dimensional view of the present safety clamp;
- fig. 4 is a second three-dimensional view of the present safety clamp;
- fig. 4a is a view of a part of fig. 4 in a different operating position;
- fig. 5 is a schematic front view of a pair of jaws of the present safety clamp.

We must clarify that the phraseology and terminology used in the present description, as well as the figures in the attached drawings also in relation as to how described, have the sole function of better illustrating and explaining the present invention, their purpose being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS

We will now refer in detail to the possible embodiments of the invention, of which one or more examples are shown in the attached drawings, by way of a non-limiting illustration. The phraseology and terminology used here is also for the purposes of providing non-limiting examples.

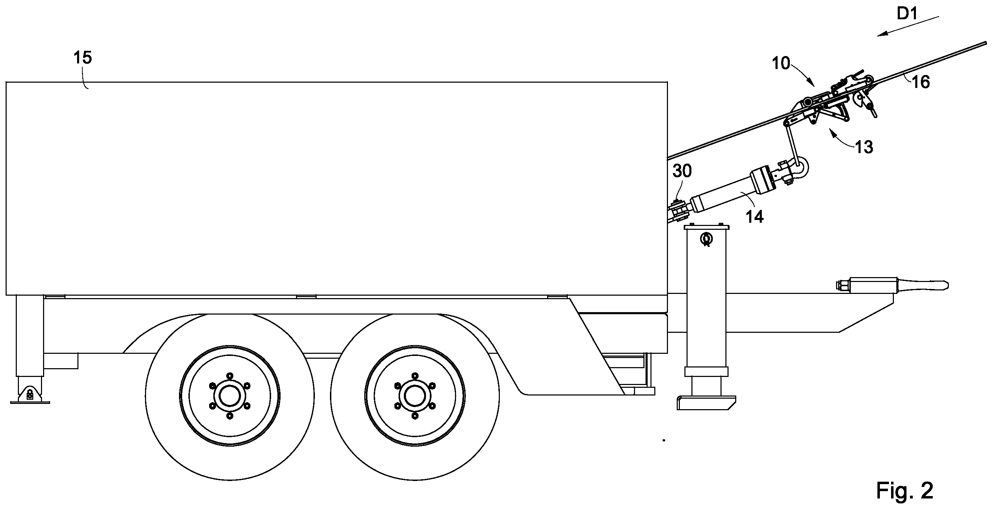

With reference to the attached drawings, see in particular figs. 1a, 1b and 2, a safety clamp 10 for cable stringing operations comprises a first jaw 11 and a second jaw 12 which are opened or closed by means of a driving device 13, configured to be connected, during use, to an attachment element 14, in particular a damper, associated with a machine 15 for recovering a cable 16. The safety clamp 10 comprises a cam 17 opposing a plurality of wheels 18, 19, in particular idle wheels. The cable 16 is sliding on the cam 17 and along the wheels 18, 19. In particular, when the cable 16 slides toward the machine 15 in a first direction D1, figs. 1a and 2, the jaws 11, 12 are in a first open position of passage of the cable 16 and the cam 17 is inactive.

When the cable 16, for example following breakage, slides in a second direction D2 opposite the first direction D1, fig. 1b, the cam 17 is automatically activated, pressing the cable 16 against at least one of the wheels 18, 19 and associating it with the safety clamp 10. The cam 17 therefore substantially makes the cable 16 integral with the safety clamp 10. The driving device 13, being connected to the attachment element 14 and following the association of the safety clamp 10 with the cable 16, puts the safety clamp 10 under tension and determines the passage of the jaws 11, 12 from the first open position to a second position of clamping the cable 16, which entails interrupting the motion of the cable 16 and of the safety clamp 10 associated therewith in the second direction D2.

The motion of the cable 16 and of the safety clamp 10 in the direction D2 is extremely limited and is linked to the brief amount of time it takes the jaws 11 and 12 to clamp on the cable 16, passing from the configuration of fig. 1a to the configuration of fig. 1b.

The first jaw 11 is substantially fixed, while the second jaw 12 is movable and connected to the driving device 13. Therefore, the second jaw 12 is clamped by the driving device 13 on the first jaw 11 in the second position.

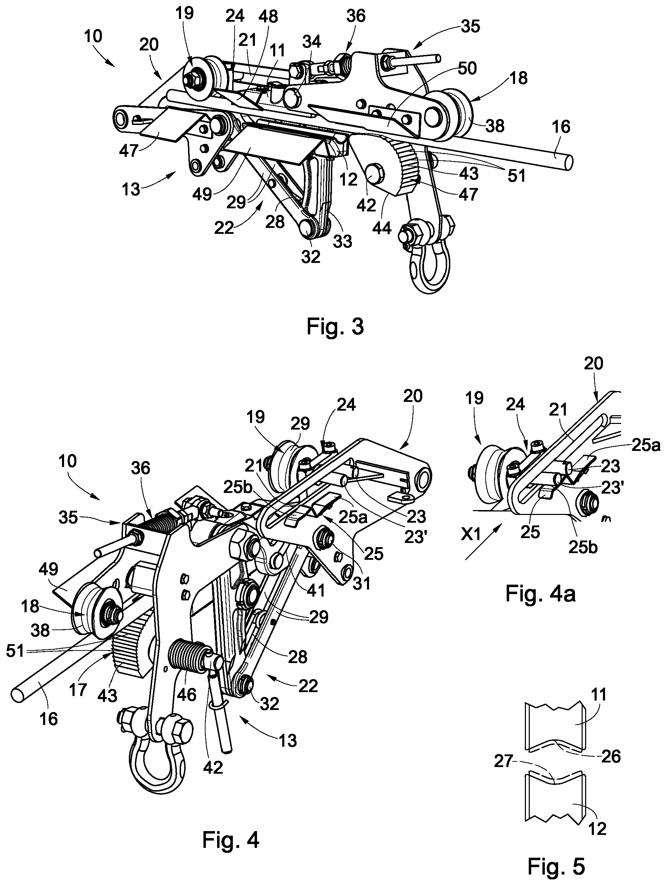

The driving device 13, see also figs. 4, 4a, comprises a support 20, such as a fork or suchlike for example, connected to an articulated mechanism 22 to which the second jaw 12 is also connected. A slot 21 is created in the support 20, in which at least one pin 23 associated with a support 24 of the wheel 19 can slide. Preferably, a pair of pins 23, 23' are provided side by side. When the support 20 slides in the direction X1 of fig. 1b, following the breakage of the cable 16 and the reversal of its motion, the pin 23 reaches a striker 25, which can have for example a substantially S-like shape provided with a first segment 25a at a first height and a second segment 25b at a second height, greater than the first height, fig. 4a. The stroke of the pin 23 is slowed down or blocked by the presence of the striker 25 attached to the support 20. The pin 23' can be positioned on the segment 25b at a height greater than the striker 25. The friction generated by the pin 23 against the striker 25 and possibly by the pin 23' is such as to overcome the force of an elastic element 28 provided between two arms 29 of the articulated mechanism 22, and it allows to block the jaws 11 and 12 in the desired position and prevent them from totally closing.

The pin 23 sliding along the slot 21 essentially determines the lifting of the jaw 12 and its at least partial closure on the first jaw 11, and the partial opening of the articulated mechanism 22, please compare fig. 1a and fig. 1b.

The slot 21 therefore allows the sliding of the pin 23 from the position of fig. 1a to the position of fig. 1b and vice versa.

The travel of the pin 23, opposing the wheel 19, inside the slot 21 substantially causes the jaws 11 and 12 to move toward or away from each other. In particular, when the wheel 19 is at the left end of the slot 21, fig. 1a, the jaws 11 and 12 are in the position of maximum distance from each other. When the wheel 19 is at the right end of the slot 21, fig. 1b, the jaws 11 and 12 are clamped together.

The arms 29 of the articulated mechanism 22 are in particular a pair and are connected at one end and rotatably to a pin 31 which is attached to the support 20, and at the other end and rotatably to another pin 32. The pin 32 is positioned at one end of a lever 33 for driving the jaws 11, 12. The lever 33 is connected at the other end and in a rotatable manner to a pin 34 for connection to a support 35.

The wheel 18 and the cam 17 are connected to the support 35. The wheel 19 is connected to the support 24.

The supports 24 and 35 are hinged in the pin 34, while the support 20, or fork, can translate with respect thereto. The supports 24 and 35 can pivot horizontally with respect to the pin 34 and are kept aligned by an elastic element 36, for example a compression spring, mounted on a reaction pin 37.

The wheels 18 and 19 are equipped with respective grooves 38 and 39 for housing the cable 16, fig. 4, for example substantially arc shaped, so as to adapt to any diameter whatsoever of the cable 16. The wheels 18 and 19 are idle and mounted on corresponding bearings.

The jaws 11 and 12 are substantially reciprocally constrained by the lever 33, which by rotating around the pin 34 exerts a compressive force, pushing the jaw 12 against the jaw 11.

The jaws 11 and 12 are substantially parallel, both in the opening position of the safety clamp 10, fig. 1a, and also in the closing position thereof, fig. 1b. This further improves the uniformity and effectiveness of the clamping on cable 16.

The jaw 12, which is movable, keeps the orientation parallel to the jaw 11, which is fixed, by means of a pin 40 sliding in an arcuate guide 41 created on the support 35. The movement of the pin 40 along the arcuate guide 41 is visible by comparing fig. 1a and fig. 1b.

The elastic element 28, for example a torsion spring, is assembled between the arms 29, see fig. 3. The elastic element 28 generates an elastic force that keeps the jaws 11 and 12 normally in the closed position. The support 20, sliding in direction X1 by means of the guide of the pin 23 in the slot 21, allows to open and close the jaws 11 and 12.

It is possible to position the support 20 in any intermediate position whatsoever along the slot 21, for example in the case of tensioning a cable with a smaller diameter and therefore requiring a smaller passage gap between the open jaws 11 and 12.

The cam 17 is eccentric and rotatable around a corresponding pin 42 attached to the support 35.

The cam 17 has a curved profile 43 with a thickness that increases from a first end 44 in contact with the cable 16 in the first open position, fig. 1a, to a second end 45 opposite the first end 44. Substantially, the second end 45 is diametrically opposite the first end 44.

Thus, in a first inactive position, if the cable 16 slides in the direction D1 as in fig. 1a, the cam 17 remains stationary and the cable 16 slides on the first end 44. If the motion of the cable 16 is reversed following breakage and follows the direction D2, the cam 17 rotates in the direction R1 and, in a second active position as in fig. 1b, determines the pressing of the cable 16 against the wheels 18, 19, in particular the wheel 18, and therefore against the first jaw 11, making the safety clamp 10 integral with the cable 16. This pressure on the cable 16 is determined by the progressive increase in the thickness of the cam 17 from the first end 44 to the second end 45.

The profile 43 for contact with the cable 16 is notched, so that the safety clamp 10 can provide greater friction for slowing down the cable 16 if it slides in the direction D2, for example following breakage. In particular, the profile 43 comprises a series of teeth 51 facing toward the inside of the safety clamp 10, that is, substantially in the opposite direction to the second direction D2. The orientation of the teeth 51 therefore does not oppose the recovery of the cable 16 in the direction D1, while it decidedly opposes its sliding in the opposite direction D2. The teeth 51 are directed substantially transversely with respect to the directions D1 and D2.

The cam 17 comprises an elastic element 46, fig. 4, for example a torsion spring, which tends to keep it in the inactive position of fig. 1a. The elastic element 46 is assembled around the pin 42. Therefore, when the cable 16 is restored and the safety clamp 10 placed in the configuration of fig. 1a, the cam 17 automatically returns to the inactive position.

With particular reference to fig. 1a and fig. 3, the present safety clamp 10 can laterally comprise guides 47, 48, 49, 50 for the insertion of the cable 16. The guides 47, 48, 49, 50 can be suitably bent and inclined sheets or suchlike. For example, it is possible to provide a first guide 47 attached to the support 20, a second guide 48 attached to the jaw 11, a third guide 49 attached to the jaw 12 and a fourth guide 50 attached to the support 35. The guides 47-50 can be connected to the corresponding elements by means of removable elements such as screws, bolts or other. The guides 47-50 are shaped so as to provide a lead-in for the lateral insertion of the safety clamp 10 on the cable 16. See for example in fig. 3 the pair of guides 47 and 49 located below the cable 16 and inclined downward, and the pair of guides 48 and 50 located above the cable 16 and inclined upward.

The jaws 11 and 12, see fig. 5, can provide respective interchangeable sheaths 26 and 27 for housing the cable 16 when it is in a clamping situation. The sheaths 26, 27 can have different thicknesses and allow the jaws 11 and 12 to adapt to different diameters of the cable 16.

The sheaths 26 and 27 are made of aluminum, so as to guarantee sufficient friction and at the same time not ruin the strands of the cable 16, for example an electrical conductor.

The attachment element 14 is in particular a damper that has the function of absorbing part of the energy of the cable 16 following breakage. The instant the cable 16 under tension moves away from the machine 15, the safety clamp 10 intervenes and blocks it instantly. The damper prevents the force deriving from the away movement of the cable 16 in the direction D2 from being transmitted violently to the machine 15. The damper can be for example a mechanical spring that works in tension.

A method for using the safety clamp 10 in a laying plant comprising the cable 16 to be laid and recovered by means of the machine 15 provides that, when the cable 16 slides toward the machine 15 in a first direction D1, the jaws 11, 12 are in a first open position of passage of the cable 16 and the cam 17 is inactive, while, when the cable 16 slides in a second direction D2 opposite the first direction D1, the cam 17 is automatically activated, pressing the cable 16 against at least one of the wheels 18, 19 and associating it with the safety clamp 10, and the driving device 13, being connected to the attachment element 14, puts the safety clamp 10 under tension and determines the passage of the jaws 11, 12 from the first open position to a second position of clamping the cable 16, which entails interrupting the motion of the cable 16 and of the safety clamp 10 associated therewith in the second direction D2.

The activation of the present safety clamp 10 is automatic, without the need for operator intervention. The workload is adapted to the stringing operations to be carried out and to the maintenance of the minimum safety coefficients provided for the stringing operations.

The safety clamp 10 can be used both in the case of conductor cables 16 and also for guard ropes. In addition, its positioning on the cable 16 is manual and does not require any special tools.

Ultimately, the task of the present safety clamp 10 is to grip and hold the cable 16 in the event it were to reverse its direction of movement, for example in the event it were sheared when passing through the machine 15, whether this is a linear winch or a traditional capstan machine. In this way, the cable 16, even in the event of breakage, remains in any case anchored to the machine and does not fall to the ground, avoiding damage to property and people.

Traditional systems for holding the pulling line currently in use do not guarantee automatic operation or, if they do intervene automatically, they do not comply with the usual safety rules in force.

The operation of the present safety clamp 10 is automatic, that is, it is able to activate itself by recognizing the direction in which the cable 16 slides.

The clamp is rigidly constrained to the machine 15, this means that it is not necessary to provide dedicated anchors or ballasts. The predetermined length of the attachment element 14 prevents the operator from positioning the clamp at an incorrect distance.

It is clear that modifications and/or additions of parts may be made to the safety clamp as described heretofore, without thereby departing from the field and scope of the present invention, as defined by the claims.

It is also clear that, although the present invention has been described with reference to some specific examples, a person of skill in the art will be able to achieve other equivalent forms of a safety clamp for cable stringing operations, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Safety clamp (10) for cable stringing operations, **characterized in that** it comprises
a pair of jaws (11, 12) between which, during use, a cable (16) is positioned;
a driving device (13) for opening and closing said jaws (11, 12), configured to be connected, during use, to an attachment element (14) associated with a machine (15) for recovering said cable (16);
on a cam (17) and a plurality of wheels (18, 19) opposing said cam (17), said cable (16) being, during use, positioned and sliding between said cam (17) and said plurality of wheels (18, 19),
wherein, when said cable (16) during use slides toward said machine (15) in a first direction (D1), said jaws (11, 12) are in a first open position of passage of said cable (16) and said cam (17) is inactive, while, when said cable (16) slides in a second direction (D2) opposite said first direction (D1), said cam (17) automatically activates, pressing said cable (16) against at least one of said wheels (18, 19) and associating it with the safety clamp (10), and said driving device (13), being connected to said attachment element (14), puts said safety clamp (10) under tension and determines the passage of said jaws (11, 12) from said first open position to a second position of clamping said cable (16), which entails interrupting the motion of said cable (16) and of the safety clamp (10) associated therewith in said second direction (D2).

2. Safety clamp (10) as in claim 1, **characterized in that** said cam (17) has a notched profile (43) configured to come into contact, during use, with said cable (16).

3. Safety clamp (10) as in claim 2, **characterized in that** said cam (17) comprises a plurality of teeth (51) facing toward the inside of the safety clamp (10), that is, substantially in the opposite direction to said second direction (D2).

4. Safety clamp (10) as in any claim hereinbefore, **characterized in that** it comprises a first fixed jaw (11) and a second jaw (12) which is movable by means of said driving device (13) and is configured to be clamped on said first jaw (11) in said second position.

5. Safety clamp (10) as in any claim hereinbefore, **characterized in that** said jaws (11, 12) are substantially parallel, both in said first position of passage of the cable (16), and also in said second clamping position.

6. Safety clamp (10) as in any claim hereinbefore, **characterized in that** said jaws (11, 12) provide respective interchangeable sheaths (26, 27) for housing the cable (16) when it is in the clamping situation.

7. Safety clamp (10) as in any claim hereinbefore, **characterized in that** it laterally comprises guides (47, 48, 49, 50) for inserting the cable (16).

8. Safety clamp (10) as in any previous claim from 4 to 7, **characterized in that** said driving device (13) comprises a mobile support (20) provided with a slot (21) sliding with respect to at least one pin (23, 23') which is associated with a wheel (19) of said plurality of wheels and is able to engage on at least one striker (25) created on said support (20), said support (20) being connected to an articulated mechanism (22) for connection with said second jaw (12).

9. Safety clamp (10) as in claim 8, **characterized in that** said articulated mechanism (22) comprises a pair of arms (29) connected at one end and in a rotatable manner to said support (20), and at the other end and in a rotatable manner to a lever (33) for driving said second jaw (12).

10. Safety clamp (10) as in any claim hereinbefore, **characterized in that** said cam (17) is rotatable around a corresponding pin (42) and has a curved profile (43) with a thickness increasing from a first end (44) in contact with said cable (16) in said first position to a second end (45) opposite said first end (44).

11. Safety clamp (10) as in any claim hereinbefore, **characterized in that** said cam (17) comprises an elastic element that tends to keep it in an inactive position.

12. Safety clamp (10) as in any claim hereinbefore, **characterized in that** said wheels (18, 19) are equipped with respective grooves (38, 39) for housing said cable (16).

13. Machine (15) for recovering a cable (16), comprising an attachment element (14) and a safety clamp (10) as in any claim hereinbefore, wherein the driving device (13) is connected to said attachment element (14).

14. Machine (15) as in claim 13, **characterized in that** said attachment element (14) is a damper.

15. Method for using a safety clamp (10) as in any claim from 1 to 12 in a laying plant comprising at least one cable (16) to be laid and recovered by means of a recovery machine (15) as in either claim 13 or 14, wherein, when said cable (16) slides toward said machine (15) in a first direction (D1), said jaws (11, 12) are in a first open position of passage of said cable (16) and said cam (17) is inactive, while, when said cable (16) slides in a second direction (D2) opposite said first direction (D1), said cam (17) automatically activates, pressing said cable (16) against at least one of said wheels (18, 19) and associating it with the safety clamp (10), and said driving device (13), being connected to said attachment element (14), puts said safety clamp (10) under tension and determines the passage of said jaws (11, 12) from said first open position to a second position of clamping said cable (16), which entails interrupting the motion of said cable (16) and of the safety clamp (10) associated therewith in said second direction (D2).
